# FASCICULE DE BREVET EUROPEEN

(11) **EP 1 191 350 B1**
(45) Date de publication et mention de la délivrance du brevet: **29.08.2007**
(21) Numéro de dépôt: 01402394.9
(22) Date de dépôt: 19.09.2001
(51) Int. Cl.: G01S 17/46, G01S 7/484, G01S 7/486, G01S 7/489

(54) **Détecteur optique à émission régulée**
Optischer Sensor mit Regelung der Sendeleistung
Optical sensor with controlled emission

(30) Priorité: 22.09.2000 FR 0012324
(43) Date de publication de la demande: 27.03.2002
(73) Titulaire: SCHNEIDER ELECTRIC INDUSTRIES SAS, 92500 Rueil-Malmaison (FR)
(72) Inventeur: Couillaud, Frédéric, 16000 Angouleme (FR)

(56) Documents cités:
- EP-A- 0 623 829
- EP-A- 0 926 512
- US-A- 4 589 773
- US-A- 5 923 427

## Description

La présente invention concerne un détecteur optique comprenant un système d'émission et de réception apte à engendrer un courant électrique d'émission pulsé et à émettre en conséquence vers un objet un faisceau optique pulsé, et apte à traiter, au moyen d'un circuit électronique de réception, un signal de tension reçu qui est produit par le faisceau optique pulsé renvoyé par l'objet et qui est fonction de la présence et/ou distance de l'objet.

On sait que les détecteurs optiques, notamment les cellules optiques à effacement d'arrière plan, génèrent un signal de tension de réception qui peut varier très largement suivant que l'objet détecté renvoie une fraction faible ou importante de l'énergie émise. Il convient donc par exemple de pouvoir augmenter l'intensité lumineuse d'émission en présence d'un objet renvoyant peu de lumière. D'autre part, dans les circuits électroniques de telles cellules optiques, il importe d'éviter la saturation des chaînes d'amplification des voies, cette saturation perturbant la détection, et il convient à cet effet de pouvoir réduire l'intensité lumineuse d'émission.

Il est connu d'utiliser dans le système d'émission et de réception de la cellule optique des moyens de régulation du courant d'émission, ces moyens de régulation faisant varier le niveau de l'énergie émise par modification de la fréquence d'émission des impulsions de courant. Mais il peut être requis de garder, pour certains types de cellules, une fréquence d'émission inchangée, et les moyens de régulation en question sont alors inutilisables.
Il est également connu du document EP 0 926 512 un détecteur optique dont le niveau d'émission n'est pas régulé mais porté de manière discrète à un niveau prédéterminé.
Le document US 4,589,773 décrit un détecteur optique à régulation permanente du niveau d'émission.
Le document EP 0 623 829 décrit quant à lui un procédé pour régler le courant d'émission d'un capteur optique en comparant le signal reçu avec une valeur nominale déterminée.

L'invention a pour but de réguler rapidement le courant d'émission d'un détecteur optique, notamment d'une cellule optique de détection d'objet par triangulation, particulièrement à effacement d'arrière plan, en conservant une fréquence d'émission stable des impulsions de courant.
Ce but est atteint par le détecteur optique tel que défini dans la revendication 1.

Selon l'invention, les moyens de régulation du courant d'émission détectent la valeur du signal de tension reçu relativement à une valeur de tension maximale et une valeur de tension minimale de régulation prédéterminées, ces valeurs définissant un intervalle de régulation ainsi que, de part et d'autre de cet intervalle, une zone de tension haute et une zone de tension basse ; d'autre part, les moyens de régulation sont combinés de façon que, lorsque le signal de tension reçu est situé dans l'intervalle de régulation, le courant d'émission est régulé par des moyens d'asservissement de façon à amener et maintenir le signal de tension reçu à une valeur de consigne, et que, lorsque le signal de tension est situé dans la zone haute ou respectivement la zone basse de tension, le courant d'émission est multiplié (ou divisé) par un facteur prédéterminé, de manière que le signal de tension soit centré rapidement dans l'intervalle de régulation, puis régulé par les moyens d'asservissement.

La combinaison ainsi réalisée d'une correction rapide et d'un asservissement est particulièrement efficace. Une forte excursion du signal reçu entraîne dans un premier temps une diminution ou augmentation de l'amplitude du courant d'émission, par un facteur notable, qui conduit le signal de tension reçu dans l'intervalle de régulation, puis dans un deuxième temps le réglage final du courant d'émission amène le signal de tension reçu à la valeur de consigne. Grâce à la première phase de centrage quasi-exponentielle, l'opération de réglage s'effectue très rapidement, c'est-à-dire s'inscrit sur quelques cycles d'émission et en tout cas sur un nombre de cycles d'émission plus faible qu'avec les détecteurs connus.

Le facteur prédéterminé est au plus égal au rapport des valeurs de tension maximale et minimale ou respectivement minimale et maximale, par exemple de l'ordre de 4 ou 1/4.

Les moyens d'asservissement peuvent avantageusement être constitués par un convertisseur numérique-analogique combiné ou non à un microcontrôleur qui calcule le niveau du courant d'émission. Celui-ci génère alors des impulsions de largeur modulée appliquées à un élément intégrateur, de façon à créer un signal analogique qui détermine un courant d'émission permettant d'atteindre la valeur de tension de consigne souhaitée.

La description va être faite ci-après d'un mode de réalisation non limitatif de l'invention, en regard des dessins annexés.

La figure 1 illustre schématiquement un détecteur optique conforme à l'invention.

La figure 2 est un diagramme montrant l'évolution de la tension de réception du détecteur de la figure 1 au cours d'opérations de réglage.

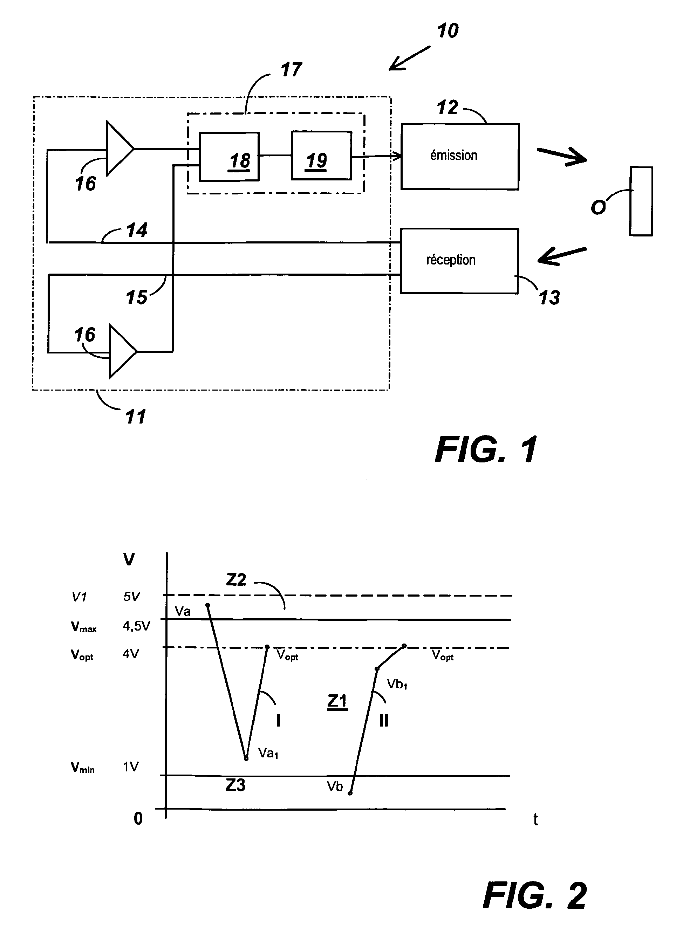

Le détecteur optique représenté sur la figure 1 est une cellule de détection par triangulation qui comprend un système d'émission et de réception 10 doté d'un circuit électronique 11 et de moyens logiciels associés, ainsi que d'un organe électro-optique émetteur 12 et un organe électro-optique récepteur 13. L'organe 12 émet un faisceau pulsé et, en présence d'un objet O, l'organe 13 reçoit un faisceau correspondant. La cellule en question est du type à effacement d'arrière plan et son circuit électronique 11 comporte donc une voie réceptrice loin 14 et une voie réceptrice près 15, mais elle pourrait être d'un type différent. Chaque voie réceptrice présente des moyens d'amplification 16 dont la sortie est appliquée à un circuit de commande 17 du courant d'émission.

Le circuit de commande 17 présente un contrôleur 18, par exemple un microcontrôleur, qui, à partir des signaux reçus, détermine un signal de tension V et, en fonction du niveau de ce signal, commande de façon différenciée le courant d'émission I (voir figure 2).

On définit pour le signal de tension une valeur maximale Vₘₐₓ et une valeur minimale Vₘᵢₙ, déterminant entre elles un intervalle de régulation Z1, ainsi qu'en dehors de cet intervalle une zone haute Z2 et une zone basse Z3, correspondant respectivement à une sursaturation et à une sous-saturation des moyens d'amplification.

Quand le signal de tension V est détecté par le contrôleur en dehors de l'intervalle Z1, c'est-à-dire dans la zone Z2 au-dessus de la valeur maximale Vₘₐₓ ou dans la zone Z3 en dessous de la valeur minimale Vₘᵢₙ, le contrôleur 18 divise ou multiplie par un facteur fixe prédéterminé k, par exemple de l'ordre de 4, l'amplitude du courant d'émission. Ceci a pour but de recentrer rapidement le signal de tension résultant pour l'amener dans la zone de convergence que constitue l'intervalle de régulation Z1 (Vₘₐₓ,Vₘᵢₙ).

Quand le signal de tension V est situé dans l'intervalle Z1, soit dès le premier tir d'impulsion, soit lors du tir suivant la phase de recentrage précédemment décrite, le contrôleur 18 porte le courant d'émission à une valeur Iₒₚₜ donnant un signal de tension Vₒₚₜ, ceci par un réglage obtenu par modulation de largeur d'impulsions.

Le contrôleur 18 peut être du type à sortie analogique commandant directement l'organe d'émission 12. Dans une version moins onéreuse, le contrôleur est à sortie numérique et est associé à un convertisseur numérique / analogique 19, fonctionnant par élaboration d'impulsions de largeur modulée (PWM) et intégration au moyen d'un circuit RC. On a illustré en I sur la figure 2 le cas où le signal de tension initial Va est supérieur à Vₘₐₓ et est amené d'abord à la valeur Va₁ comprise dans Z1 avant d'être porté à la valeur Vₒₚₜ ; et en II le cas où le signal de tension initial Vb est inférieur à Vₘₐₓ et est amené d'abord à la valeur Vb₁ comprise dans Z1 puis à la valeur Vₒₚₜ.

Dans tous les cas, le signal de tension est inférieur à une valeur V1 définie par la chaîne d'amplification 16. A titre d'exemple, V1 peut être égal à 5V, Vₘₐₓ à 4,5V, Vₒₚₜ à 4V et Vₘᵢₙ à 1V. Le facteur k par lequel on multiplie ou divise le courant d'émission est par exemple de l'ordre de 4. La phase finale de régulation a l'avantage de s'effectuer durant un seul cycle d'émission ; dans la phase finale, si l'on désigne par τ le rapport cyclique de modulation des impulsions de commande au début de cette phase, le circuit 18 change ce rapport cyclique en τₒₚₜ = τ × Vₒₚₜ/Vₐ₁ (ou Vₒₚₜ/V_{b1}), de sorte que le courant d'émission est modifié en proportion et que le signal de tension V est amené à la valeur de consigne Vₒₚₜ.

## Revendications

1. Détecteur optique comprenant un système d'émission et de réception apte à engendrer un courant électrique d'émission pulsé et à émettre en conséquence vers un objet un faisceau optique pulsé, et apte à traiter un signal de tension reçu qui est produit par le faisceau optique pulsé renvoyé par l'objet et qui est fonction de la présence et/ou distance de l'objet, le système d'émission et de réception comportant des moyens de régulation du courant d'émission, qui détectent la valeur (V) du signal de tension reçu relativement à une valeur de tension maximale (Vₘₐₓ) et une valeur de tension minimale de régulation (Vₘᵢₙ) prédéterminées, ces valeurs définissant un intervalle de régulation (Z1) ainsi qu'une zone de tension haute (Z2) et une zone de tension basse (Z3),
***caractérisé par le fait que** :*
- les moyens de régulation sont combinés de manière que, lorsque le signal de tension (V) est situé dans l'intervalle de régulation (Z1), le courant d'émission est régulé par des moyens d'asservissement (18,19) pour porter le signal de tension à une valeur de consigne (Vₒₚₜ) et que, lorsque le signal de tension (V) est situé dans la zone haute (Z2) ou la zone basse (Z3), le courant d'émission est multiplié (divisé) par un facteur prédéterminé (k), pour que le signal de tension soit centré rapidement dans l'intervalle de régulation (Z1), puis régulé par les moyens d'asservissement (18,19),
- le facteur prédéterminé (k) étant au plus égal au rapport des valeurs de tension maximale et minimale Vₘₐₓ/Vₘᵢₙ, ou respectivement minimale et maximale Vₘᵢₙ/Vₘₐₓ.

2. Détecteur selon la revendication 1, **caractérisé par le fait que**, lorsque le signal de tension (V) est situé dans l'intervalle de régulation (Z1), le courant d'émission est multiplié par un facteur fonction du rapport entre la valeur de tension de consigne (Vₒₚₜ) et la valeur de tension (Vₐ₁, V_{b1}) du signal reçu.

3. Détecteur selon la revendication 1, **caractérisé par le fait que** les moyens d'asservissement comprennent un microcontrôleur (18) associé à des moyens (19) de modulation et d'intégration d'impulsions de largeur modulée, de façon à créer un signal analogique qui détermine un courant d'émission correspondant à la valeur de tension de consigne à atteindre (Vₒₚₜ).

## Claims

1. Optical detector comprising a transmission and reception system able to generate a pulsed transmit electrical current and consequently transmit to an object a pulsed optical beam, and able to process a received voltage signal which is produced by the pulsed optical beam returned by the object and which depends on the presence of and/or distance to the object, the transmission and reception system comprising means of regulating the transmit current, which detect the value (V) of the received voltage signal relative to predetermined maximum (Vₘₐₓ) and minimum (Vₘᵢₙ) regulation voltage values, these values defining a regulation range (Z1) and a high voltage region (Z2) and a low voltage region (Z3),
***characterized in that**:*
- the regulation means are combined so that, when the voltage signal (V) is located within the regulation range (Z1), the transmit current is regulated by servo-control means (18, 19) to raise the voltage signal to a setpoint value (Vₒₚₜ) and, when the voltage signal (V) is located in the high region (Z2) or the low region (Z3), the transmit current is multiplied (divided) by a predetermined factor (k) for the voltage signal to be rapidly centred in the regulation range (Z1), then regulated by the servo-control means (18, 19),
- the predetermined factor (k) being at most equal to the ratio of the maximum and minimum voltage values Vₘₐₓ/Vₘᵢₙ or, respectively, minimum and maximum voltage values Vₘᵢₙ/Vₘₐₓ.

2. Detector according to Claim 1, **characterized in that**, when the voltage signal (V) is located in the regulation range (Z1), the transmit current is multiplied by a factor dependent on the ratio between the setpoint voltage value (Vₒₚₜ) and the voltage value (Vₐ₁, V_{b1}) of the received signal.

3. Detector according to Claim 1, **characterized in that** the servo-control means comprise a microcontroller (18) associated with means (19) of modulating and integrating pulses of modulated width, so as to create an analogue signal which determines a transmit current corresponding to the setpoint voltage value to be reached (Vₒₚₜ).

## Patentansprüche

1. Optischer Detektor, der ein Sende- und Empfangssystem enthält, das geeignet ist, einen gepulsten elektrischen Sendestrom zu erzeugen und demnach ein gepulstes Lichtstrahlenbündel zu einem Objekt zu senden, und das geeignet ist, ein empfangenes Spannungssignal, das durch das von dem Objekt zurückgesendete gepulste Lichtstrahlenbündel erzeugt wird und das von dem Vorhandensein und/oder der Entfernung des Objekts abhängt, zu verarbeiten, wobei das Sende- und Empfangssystem Mittel zur Regelung des Sendestroms enthält, die den Wert (V) des empfangenen Spannungssignals relativ zu einem vorgegebenen maximalen Regelungsspannungswert (Vₘₐₓ) und einem vorgegebenen minimalen Regelungsspannungswert (Vₘᵢₙ) erfassen, wobei diese Werte ein Regelungsintervall (Z1) sowie eine hohe Spannungszone (Z3) und eine tiefe Spannungszone (Z2) definieren,
**dadurch gekennzeichnet, dass**
- die Regelungsmittel so kombiniert sind, dass dann, wenn das Spannungssignal (V) in dem Regelungsintervall (Z1) liegt, der Sendestrom durch Nachführungsmittel (18, 19) geregelt wird, um das Spannungssignal auf einen Sollwert (Vₒₚₜ) zu bringen, und dann, wenn das Spannungssignal (V) in der hohen Zone (Z2) oder der tiefen Zone (Z3) liegt, der Sendestrom mit einem vorgegebenen Faktor (k) multipliziert (oder durch diesen dividiert) wird, damit das Spannungssignal schnell in der Mitte des Regelungsintervalls (Z1) zentriert wird und danach durch die Nachführungsmittel (18, 19) geregelt wird, und
- der vorgegebene Faktor (k) im Höchstfall gleich dem Verhältnis von maximalem zu minimalem Spannungswert Vₘₐₓ/Vₘᵢₙ bzw. von minimalem zu maximalem Spannungswert Vₘᵢₙ/Vₘₐₓ ist.

2. Detektor nach Anspruch 1, **dadurch gekennzeichnet, dass** dann, wenn das Spannungssignal (V) in dem Regelungsintervall (Z1) liegt, der Sendestrom mit einem Faktor multipliziert wird, der von dem Verhältnis zwischen dem Sollspannungswert (Vₒₚₜ) und dem Spannungswert (Vₐ₁, V_{b1}) des empfangenen Signals abhängt.

3. Detektor nach Anspruch 1, **dadurch gekennzeichnet, dass** die Nachführungsmittel einen Mikrocontroller (18) enthalten, der Mitteln (19) zur Modulation und Integration von Impulsen modulierter Breite zugeordnet ist, derart, dass ein Analogsignal erzeugt wird, das einen Sendestrom bestimmt, der dem zu erreichenden Sollspannungswert (Vₒₚₜ) entspricht.
